Europäisches Patentamt

European Patent Office

Office européen des brevets

(19)

(11) **EP 1 010 516 A1**

## (12) DEMANDE DE BREVET EUROPEEN

(43) Date de publication:
   **21.06.2000 Bulletin 2000/25**

(51) Int Cl.⁷: $B30B\ 1/26$, $F16H\ 35/02$

(21) Numéro de dépôt: **99403147.4**

(22) Date de dépôt: **15.12.1999**

(84) Etats contractants désignés:
   **AT BE CH CY DE DK ES FI FR GB GR IE IT LI LU MC NL PT SE**
   Etats d'extension désignés:
   **AL LT LV MK RO SI**

(30) Priorité: **18.12.1998 FR 9815993**

(71) Demandeur: **S.M. Contact**
   **77860 Quincy-Voisins (FR)**

(72) Inventeur: **Roshardt, Alain**
   **77144 Chalifert (FR)**

(74) Mandataire: **Bonnetat, Christian**
   **CABINET BONNETAT**
   **29, rue de St. Pétersbourg**
   **75008 Paris (FR)**

## (54) Presse à mécanisme d'entraînement par maneton excentré

(57) -L'invention concerne une presse à mécanisme d'entraînement par maneton excentré et coopérant, d'un côté, avec l'arbre de sortie d'un moteur et, de l'autre côté, avec un coulisseau de façon à imprimer à ce dernier, par suite de la rotation du moteur, un mouvement rectiligne de va-et-vient entre une position haute, inactive et une position basse, active de pressage.

- Selon l'invention, le mécanisme d'entraînement 3 comporte une pluralité de roues (10, 14, 15) montées excentrées sur des arbres (5, 11, 16) et entraînées par un lien sans fin (17) de façon à obtenir, en position basse, active, un effort de pressage élevé tout en exigeant un couple moteur réduit.

FIG.1

**Description**

La présente invention concerne une presse à mécanisme d'entraînement par maneton excentré, destinée, dans une application préférentielle quoique non exclusive, à des opérations de sertissage telles que la mise en place de contacts ou broches électriques dans des logements de connecteurs ou sur des extrémités de fils. Cependant, il va de soi que la presse selon l'invention pourrait être utilisée pour d'autres applications sans sortir du cadre de l'invention, dès l'instant où l'on souhaite procéder à un assemblage par pressage d'une pièce sur une autre.

On connaît déjà des presses à mécanisme d'entraînement par maneton excentré et coopérant, d'un côté, avec l'arbre de sortie d'un moteur et, de l'autre côté, avec un coulisseau de façon à imprimer à ce dernier, par suite de la rotation du moteur, un mouvement rectiligne de va-et-vient entre une position haute, inactive et une position basse, active, de pressage.

Si l'entraînement du coulisseau par un maneton excentré monté sur l'arbre du moteur donne de bons résultats en ce qui concerne la fiabilité de fonctionnement de la presse, il présente en revanche des limitations en ce qui concerne l'effort de pressage fourni.

En effet, pour obtenir un effort important de pressage (de sertissage dans l'application préférentielle) au niveau de l'outil de poinçonnage prévu en bout du coulisseau, il est nécessaire de fournir un couple élevé au niveau de l'arbre du moteur et, donc, d'augmenter la puissance de ce dernier et de diminuer l'excentricité du maneton, ce qui réduit la course de fonctionnement du coulisseau. Cela conduit forcément à l'utilisation d'un moteur surdimensionné d'où il en découle un encombrement accru de la presse avec une consommation énergétique plus élevée.

Par le document DE-196 01 300, on connaît une machine de déformation, en particulier une presse, qui comprend un mécanisme d'entraînement particulier. Ce dernier comporte un maneton excentré, ainsi que deux roues dentées en engrènement, dont l'une est montée sur un arbre d'entraînement et dont l'autre est montée sur un arbre à maneton. Ces roues dentées peuvent être des roues non circulaires ou des roues circulaires montées de façon excentrée. De plus, ces roues dentées sont formées de manière à obtenir un rapport de multiplication périodiquement variable.

En outre, le document DE-42 41 231 divulgue un entraînement à courroie. Ladite courroie entoure deux roues qui peuvent être montées de façon excentrée, ainsi qu'une troisième roue qui présente un profil non rond, qui est formé de sorte que la courroie soit toujours soumise à la même tension, quelles que soient les positions des différentes roues.

La présente invention a pour but de pallier les inconvénients précités et concerne une presse qui permet de fournir un effort de pressage important sans utiliser un moteur surdimensionné et qui présente une compacité appréciable.

A cet effet, la presse à mécanisme d'entraînement par maneton excentré et coopérant, d'un côté, avec l'arbre de sortie d'un moteur et, de l'autre côté, avec un coulisseau de façon à imprimer à ce dernier, par suite de la rotation du moteur, un mouvement rectiligne de va-et-vient entre une position haute, inactive et une position basse, active de pressage, ledit mécanisme d'entraînement comprenant :

- une première roue montée excentrée sur ledit arbre de sortie du moteur ;
- un arbre portant ledit maneton excentré relié au coulisseau et disposé parallèlement audit arbre de sortie du moteur et orthogonalement au mouvement rectiligne du coulisseau ; et
- une deuxième roue montée excentrée sur ledit arbre à maneton, est remarquable, selon l'invention :
- en ce que ledit mécanisme d'entraînement comprend de plus :

  . une troisième roue de compensation montée, de façon excentrée, sur un arbre, lesdites première, deuxième et troisième roues étant situées dans un même plan parallèle audit mouvement du coulisseau ; et
  . un lien s'enroulant autour desdites roues pour leur entraînement ;

- et en ce que l'agencement des première et deuxième roues est tel que, lorsque le coulisseau est en position basse, le bras de levier de la deuxième roue par rapport à son arbre est maximal, tandis que le bras de levier de la première roue par rapport à son arbre est minimal.

Ainsi, grâce au mécanisme d'entraînement à roues excentrées et à l'agencement particulier des première et deuxième roues, le couple de pressage est considérablement augmenté par le bras de levier de la deuxième roue, qui croît pour être maximal à ce moment précis du cycle de fonctionnement de la presse, tandis que simultanément le couple résistant appliqué à la première roue est minimal, puisque son bras de levier décroît pour être minimal. Par conséquent, une telle conception de la presse permet d'utiliser un moteur à puissance modérée tout en obtenant un effort de pressage important. Ainsi, comme la puissance à fournir par le moteur est modérée, ce dernier peut être de dimension réduite avec une consommation énergétique peu élevée, si bien que la presse présente une compacité appréciable.

Dans l'application au sertissage, on s'arrange pour que le couple de pressage maximal se produise juste avant la position basse (point mort bas) du coulisseau, durant un angle de rotation où le bras de levier de la deuxième roue est important, c'est-à-dire au moment où l'outil de poinçonnage déforme progressivement le métal du contact jusqu'à son sertissage proprement dit, qui doit être achevé quand l'outil occupe sa position basse. Simultanément au couple de pressage maximal fourni par la deuxième roue, le couple résistant à vaincre par le moteur est minimal puisque le bras de levier, durant cet angle de rotation, décroît jusqu'à devenir minimal.

Ainsi, on peut choisir et appliquer, selon l'agencement des roues excentrées du mécanisme, un couple maximal à un moment quelconque du cycle et, dans l'application au sertissage, juste avant la position basse, point mort bas, de l'outil de poinçonnage.

On notera que les roues divulguées par le document DE-196 01 300 précité ne sont pas formées et/ou agencées de manière à obtenir les caractéristiques conformes à la présente invention et mentionnées précédemment, concernant les bras de levier des première et deuxième roues. De plus, ce document DE-196 01 300 connu divulgue des roues dentées qui engrènent l'une avec l'autre et la transmission du mouvement est réalisée par l'intermédiaire de cet engrènement, alors que les roues conformes à la présente invention ne sont pas en engrènement et que la transmission est réalisée au moyen d'un lien additionnel qui s'enroule autour de ces roues. Le mode d'entraînement est donc totalement différent. En raison de l'engrènement, les profils respectifs des roues fixes de ce document connu doivent être adaptés les uns aux autres. Aucune compensation externe (par un lien additionnel) ne peut donc être réalisée, à la différence de la présente invention. De plus, ce mode d'entraînement connu est difficile à réaliser et coûteux.

Dans un cas particulier, lesdites roues ont un diamètre identique et l'excentricité des première et deuxième roues par rapport à leurs arbres respectifs est identique.

Par exemple, le lien est constitué par une courroie sans fin s'enroulant autour desdites roues. Avantageusement, pour garantir un entraînement synchrone, ladite courroie sans fin est crantée intérieurement et s'enroule autour de crans correspondants prévus sur la périphérie desdites roues.

Ledit mécanisme d'entraînement comprend, de plus, un galet de renvoi porté par un arbre et agissant sur l'extérieur dudit lien. De préférence, ledit galet de renvoi est situé entre la première roue et la troisième roue. Son rôle est d'assurer un angle d'enroulement correct du lien sur chaque roue et de permettre l'utilisation de courroies standards.

Selon une autre caractéristique de l'invention, ledit mécanisme d'entraînement peut être confiné dans un boîtier portant notamment ledit moteur et lesdits arbres des deuxième et troisième roues. Cela est rendu possible par l'utilisation d'un moteur de puissance moyenne et par la réalisation sensiblement plane, sous forme de roues et d'un lien, dudit mécanisme d'entraînement.

Par ailleurs, une bielle relie, de façon articulée, ledit maneton audit coulisseau, transférant le mouvement rotatif du maneton en un mouvement rectiligne alternatif du coulisseau.

Les figures du dessin annexé feront bien comprendre comment l'invention peut être réalisée. Sur ces figures, des références identiques désignent des éléments semblables.

La figure 1 représente schématiquement un exemple de réalisation de la presse selon l'invention lorsqu'elle occupe la position basse, active, de pressage.

La figure 2 est une vue de côté de la presse illustrée sur la figure 1.

Les figures 3, 4 et 5 sont des vues analogues à la figure 1 mais illustrant des positions intermédiaires du cycle de fonctionnement de la presse.

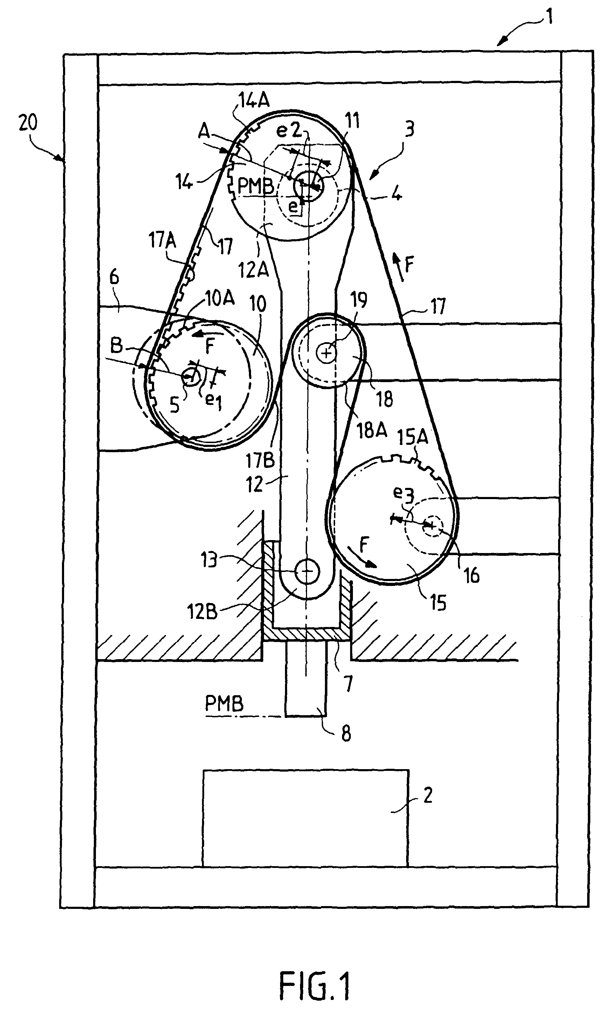

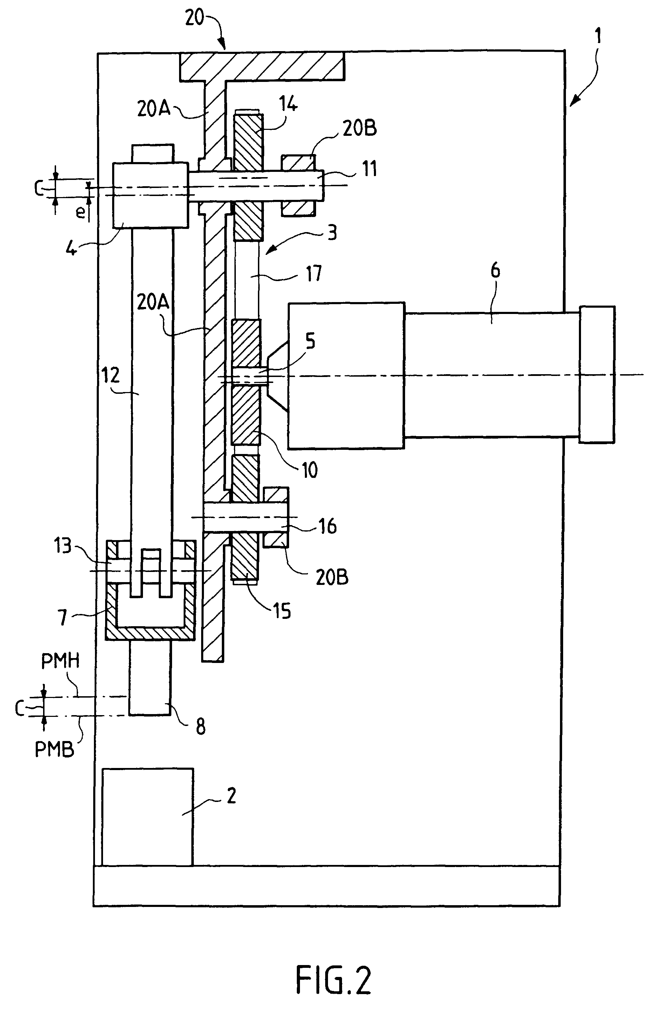

La presse 1 montrée schématiquement sur les figures 1 et 2 est destinée, dans son application préférentielle, au sertissage de contacts électriques non représentés, agencés sériellement sous forme de bobine ou autre et amenés successivement, à chaque cycle de fonctionnement de la presse, sur un outillage de sertissage 2 connu en soi.

La presse 1 comprend un mécanisme d'entraînement 3 qui est du type à maneton excentré 4 et qui coopère, d'un côté, avec l'arbre de sortie 5 d'un moto-réducteur 6 et, de l'autre côté, avec un coulisseau 7 portant un outil de poinçonnage ou analogue 8 destiné à venir au contact de l'outillage de sertissage 2 pour fixer le contact électrique. Par suite de la rotation de l'arbre de sortie 5 du moto-réducteur et par l'intermédiaire du mécanisme d'entraînement 3, un mouvement rectiligne alternatif ou de va-et-vient, sensiblement vertical dans cet exemple, est imprimé au coulisseau 7, entre une position haute, inactive et une position basse, active, de pressage si bien que, dans cette dernière position représentée sur les figures 1 et 2, le contact électrique est serti par l'outil de poinçonnage 8 et l'outillage de sertissage 2.

Selon l'invention, le mécanisme d'entraînement 3 comporte une pluralité de roues montées excentrées sur des arbres et entraînées par un lien sans fin de façon à obtenir un effort de pressage élevé tout en exigeant du moteur un couple faible, ce qui permet de concevoir une presse relativement compacte.

Pour cela, le mécanisme d'entraînement 3 comprend une première roue 10 qui est montée avec une excentricité e1 sur l'arbre de sortie 5 du moto-réducteur 6. Cette première roue est solidaire en rotation de l'arbre de sortie et la distance séparant parallèlement l'axe de rotation de l'arbre 5 de l'axe géométrique de la première roue 10 correspond à l'excentricité e1.

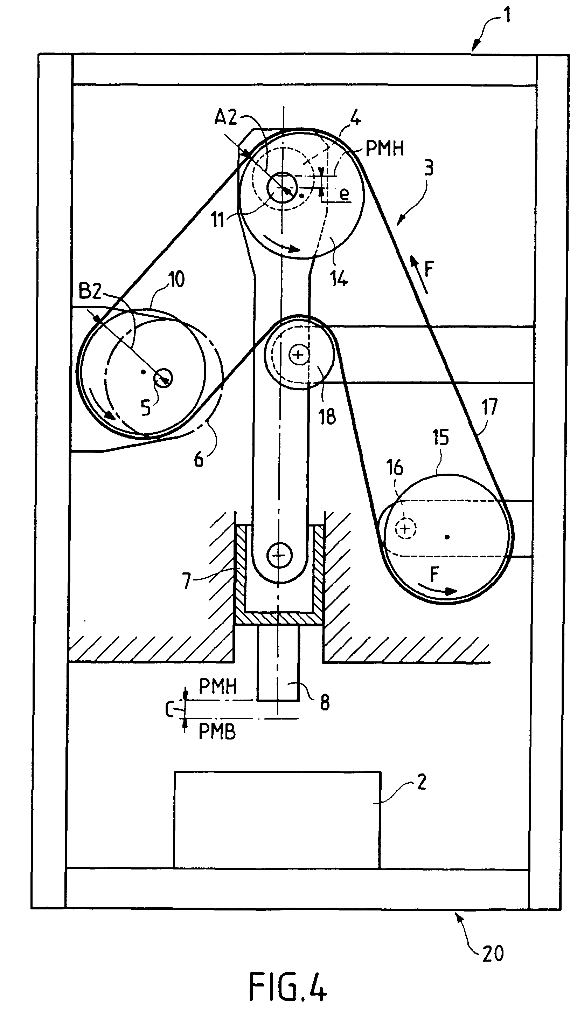

De plus, un arbre 11, qui porte le maneton 4 avec une excentricité e, est disposé parallèlement à l'arbre de sortie 5 du moto-réducteur et est situé sur les figures 1 et 2, au-dessus du coulisseau 7, orthogonalement au déplacement de ce dernier. Une bielle 12 relie le maneton 4 au coulisseau 7 par ses extrémités. L'une 12A de ses extrémités est montée autour du maneton 4 en définissant ainsi une articulation cylindrique, et l'autre extrémité 12B est associée au coulisseau via un axe d'articulation 13 parallèle à l'arbre 11. La bielle transforme le mouvement de rotation du maneton en mouvement de translation alternatif du coulisseau. Dans les positions illustrées sur les figures 1 et 4, la bielle 12 a une configuration sensiblement verticale lorsque le coulisseau 7 est en position basse ou haute.

La course C du coulisseau 7 entre sa position basse (point mort bas PMB, figures 1 et 2) et sa position haute (point mort haut PMH, figure 4) est égale à deux fois l'excentricité e du maneton par rapport à l'axe géométrique de l'arbre 11, entre ses deux positions extrêmes PMB et PMH décalées de 180° l'une de l'autre.

Sur cet arbre 11 à maneton 4, est montée de façon excentrée une deuxième roue 14 avec une excentricité e2 qui est identique à l'excentricité e1 de la première roue 10 et qui correspond à la distance séparant parallèlement l'axe de rotation de l'arbre 11 de l'axe géométrique de la deuxième roue 14.

Le mécanisme d'entraînement 3 comprend également une troisième roue de compensation 15, montée excentrée sur un arbre 16 et qui reprend en permanence la longueur de brin du lien 17 pour que celui-ci soit toujours convenablement sous tension. L'excentricité e3 de cette troisième roue 15, c'est-à-dire la distance séparant parallèlement son axe géométrique de l'axe dudit arbre 16, est égale, dans cet exemple, à deux fois l'excentricité e1, e2 des première et deuxième roues, bien que cela ne soit pas obligatoire. Un galet de renvoi 18 est en outre monté sans excentricité sur un arbre 19. Ce galet de renvoi est situé entre les première et troisième roues. Bien évidemment, l'ensemble des roues et du galet est contenu dans un même plan, parallèle au mouvement du coulisseau. Les diamètres des trois roues 10, 14 et 15 sont par ailleurs identiques.

Le lien 17 du mécanisme d'entraînement 3 est défini par exemple par une courroie à section rectangulaire ou trapézoïdale et s'enroule autour de ces roues 10, 14, 15. La face interne 17A de la courroie est crantée pour garantir un entraînement synchrone des roues et, par suite, du coulisseau. A cet effet, comme le montre partiellement la figure 1, la périphérie 10A, 14A et 15A des première, deuxième et troisième roues autour desquelles la face crantée 17A de la courroie s'enroule, présente des crans, tandis que la périphérie 18A du galet de renvoi 18 est lisse puisque la courroie coopère avec celle-ci par sa face externe 17B.

Avantageusement, le mécanisme d'entraînement 3 ainsi que le coulisseau 7 à poinçon et l'outillage de sertissage 2 sont confinés dans un bâti ou boîtier 20 sensiblement parallélépipédique et constitué de parois 20A assemblées de façon appropriée. Ainsi, le moto-réducteur 6 est fixé directement sur l'une d'elles. Les arbres 11, 16 et 19 sont portés via des paliers par une paroi verticale 20A et des supports 20B, de sorte que, d'un côté de la paroi, en regard de la figure 2, se trouvent le maneton 4, le coulisseau 7 à poinçon 8 et l'outillage de sertissage 2 et, de l'autre côté, les roues 10, 14, 15 et le lien 17 du mécanisme d'entraînement 3, ce qui permet de limiter l'encombrement de la presse.

Comme le montre la figure 1, l'agencement des première et deuxième roues 10, 14 du mécanisme d'entraînement est tel que, lorsque le coulisseau 7 est en position basse, c'est-à-dire quand l'effort de sertissage est appliqué, le bras de levier A de la deuxième roue 14 par rapport à son arbre 11 est sensiblement maximal et perpendiculaire audit effort (dirigé suivant l'axe du coulisseau), tandis que le bras de levier B de la première roue 10 par rapport à l'arbre 5 du moteur 6 est minimal. Cet agencement est obtenu au moment du montage de la courroie 17, en plaçant les roues excentrées dans la position souhaitée. Le bras de levier de chaque roue par rapport à son arbre correspond à la distance comprise entre l'axe géométrique de l'arbre et la périphérie de la roue concernée (au point de tangence de la courroie).

Ainsi, comme le couple fourni par la deuxième roue 14 est maximal (bras de levier A maximal) et que le coulisseau 7 est en position basse, active, il exerce alors, via l'outillage de poinçonnage 8, un effort de sertissage maximal, tandis que le moteur est soumis à un couple résistant minimal, à ce moment du cycle de fonctionnement, (bras de levier B minimal), grâce aux deux roues excentrées 10, 14 qui sont montées pour être en opposition de phase lorsque le coulisseau est en position basse, active. Le couple résistant opposé du moteur bénéficie, à ce moment du cycle, du rapport couple moteur / couple résistant le plus favorable.

A titre d'exemple, pour des roues identiques de 90 mm de diamètre et pour une excentricité de 15 mm, le rapport entre les deux roues 14 et 10 dans la position illustrée est égal à

$$\left( \frac{90}{2} + 15 \Big/ \frac{90}{2} - 15 \right),$$

de sorte que le couple délivré par la roue 14 par rapport à son arbre, au moment du sertissage, est le double du couple résistant à fournir par la roue du moteur. Grâce à ce mécanisme 3, l'effort du sertissage maximal de la presse peut être obtenu en utilisant un moto-réducteur de puissance modérée donc moins encombrant et plus économe.

Par ailleurs, la vitesse de translation du coulisseau 7 et, donc, de l'outillage de poinçonnage 8, est ralentie au voisinage de sa position basse et nulle lorsqu'il occupe la position point mort bas. Le ralentissement de la vitesse se produit par l'opération de sertissage en elle-même avant l'arrivée de l'outillage 8 dans la position point mort bas. En effet, on s'arrange, au moment du montage du mécanisme d'entraînement, pour que le sertissage commence avant le point mort bas, puis se déroule sur un angle de rotation de la deuxième roue où le bras de levier A est le plus important, pour s'achever lorsque l'outillage 8 occupe la position point mort bas. On applique le couple de pressage maximal au moment où la presse accomplit l'essentiel du travail de déformation du métal pour sertir un contact par exemple. En conséquence, le mécanisme d'entraînement ralentit fortement sa vitesse avant le point mort bas et ce sur une course très réduite du coulisseau, correspondant à celle nécessaire à l'opération de sertissage. Durant celle-ci, alors que le couple de pressage est important, le couple résistant fourni par la première roue est faible puisque son bras de levier est minimal.

De la sorte, le sertissage proprement dit est optimisé puisque le métal constituant les contacts a davantage le temps de fluer dans l'outillage 2 pour prendre sa forme durant ce moment du cycle avant le point mort bas, d'autant plus que l'effort de pressage est maximal. Dans la position illustrée sur les figures 1 et 2, la bielle 12 occupe une configuration verticale, alignée avec l'axe du coulisseau, et le maneton 4 de l'arbre est en position point mort bas (PMB) par rapport à l'axe géométrique de son arbre 11.

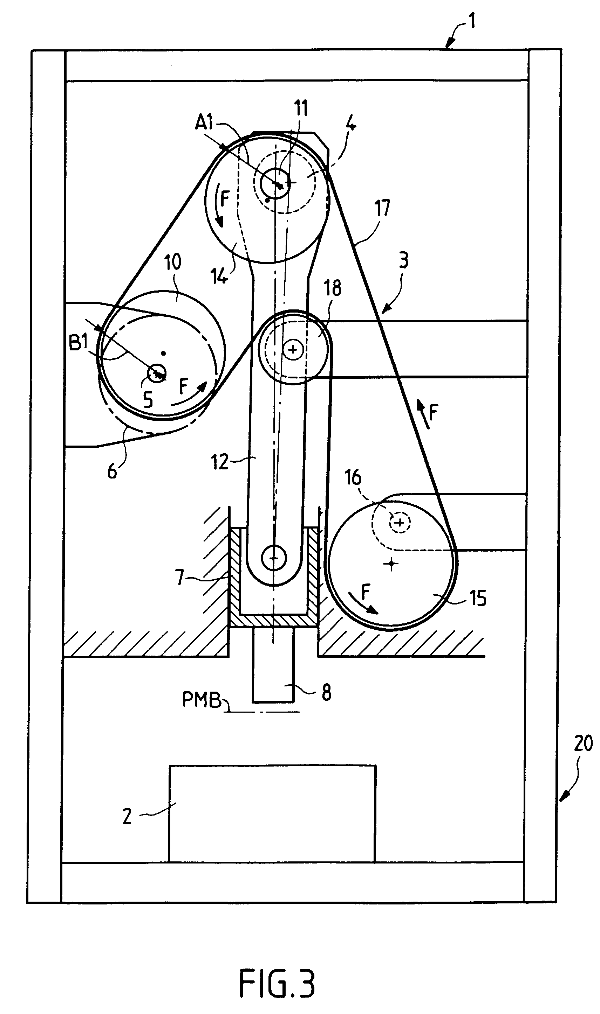

A partir de la position basse du coulisseau, un nouveau cycle débute. La rotation du moto-réducteur 6 entraîne, via le mécanisme d'entraînement 3 à maneton excentré 4 et la bielle 12, la remontée du coulisseau 7 vers la position haute, inactive. On voit sur la figure 3 qu'après une rotation de $\pi/2$ ou 90°, selon le sens des flèches F indiquées sur la courroie 17 et les roues, le bras de levier de la deuxième roue 14 diminue pour prendre une valeur A1, tandis que le bras de levier de la première roue 10 augmente pour prendre une valeur B1 par suite de la rotation excentrée des roues 14 et 10. Simultanément, la troisième roue 15 tourne de façon excentrée sur son arbre 16 et compense les rotations excentrées e1 et e2 des première et deuxième roues, si bien que la courroie est ainsi convenablement sous tension. La rotation de 90° du maneton 4 excentré sur l'arbre 11 provoque le déplacement angulaire de la bielle 12 vers la droite sur la figure 3 et, ainsi, la remontée du coulisseau 7 qui est tiré par la bielle et s'éloigne de sa position basse PMB.

Après une rotation de 180° à partir de la figure 1 ou de 90° à partir de la figure 3, le bras du levier de la deuxième roue 14 atteint une valeur minimale A2 et, inversement, le bras de levier de la première roue 10 atteint une valeur maximale B2. Le maneton 4 est en position point mort haut et la distance entre ses deux positions extrêmes (point mort bas et point mort haut) et égale à deux fois son excentricité $\underline{e}$, correspond à la course C séparant les positions haute et basse de l'outillage de poinçonnage 8 porté par le coulisseau 7. La bielle 12 est de nouveau dans une configuration verticale, alignée avec le coulisseau, mais opposée à celle illustrée sur la figure 1, si bien que le coulisseau est en position haute, inactive. Les trois roues 10, 14, 15 ont tourné de 180° autour de leurs arbres respectifs pour se trouver alors dans des positions opposées à celles occupées sur la figure 1.

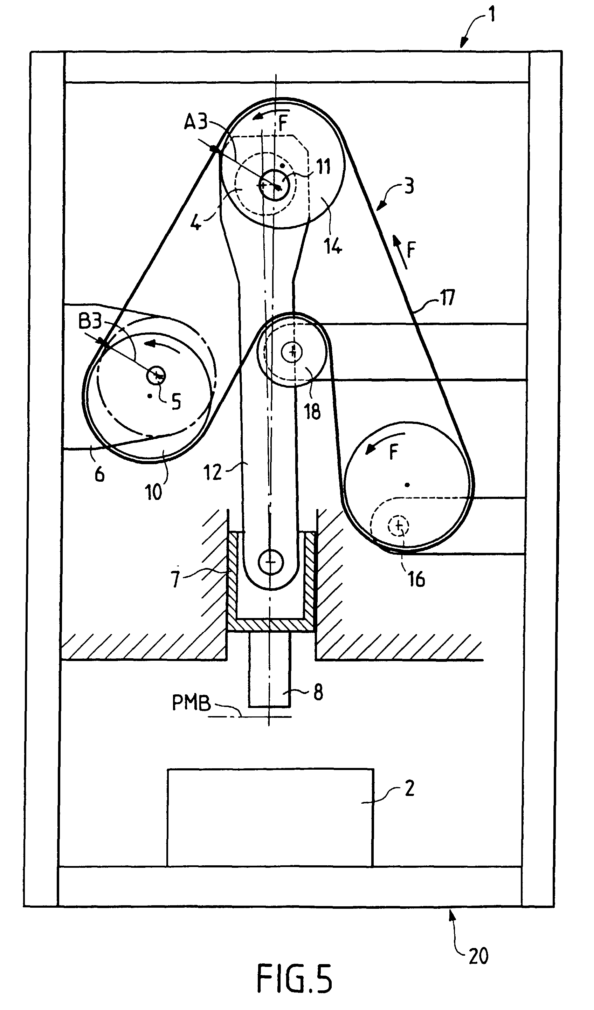

Le mécanisme d'entraînement 3 poursuit son mouvement imprimé par le moto-réducteur 6 et passe par la position illustrée sur la figure 5 pour laquelle le maneton 4 a effectué, par rapport à l'axe géométrique de son arbre 11, une rotation de 270° depuis la figure 1. Les bras de levier des roues commencent à augmenter pour la roue 14 et à diminuer pour la roue 10 pour atteindre les valeurs A3 et B3 respectivement. La position des roues est sensiblement symétrique de celle illustrée sur la figure 3. La bielle 12 est décalée angulairement de l'autre côté par rapport à l'axe de déplacement du coulisseau 7, lequel se trouve dans son mouvement de descente, commencé depuis la position point mort haut du maneton 4, pour se rapprocher de l'outillage de sertissage 2.

Entre temps, le contact qui a été serti sur ce dernier est retiré et un nouveau contact à sertir a été amené sur l'outillage de sertissage.

La descente du coulisseau 7 se poursuit par suite de la rotation de l'arbre 5 du moto-réducteur 6, du mécanisme d'entraînement 3 à maneton 4 et de la bielle 12 jusqu'à atteindre la position basse, illustrée sur la figure 1, pour laquelle les bras de levier des roues 14 et 10 sont à nouveau maximal A et minimal B respectivement, le sertissage du contact ayant commencé avant le point mort bas, au moment où l'effort est renforcé via le couple fourni par la deuxième roue, pour s'achever dans ladite position basse. Un nouveau cycle peut alors débuter.

On remarque, notamment sur les figures 1 et 2, l'extrême compacité de la presse 1, qui est rendue possible par l'utilisation d'un moto-réducteur à faible puissance et, donc, de dimension réduite, grâce à la conception du mécanisme d'entraînement 3. Par ailleurs, le nombre de roues, leur excentricité, la position de leur centre ainsi que la longueur du lien peuvent être modifiés sans sortir du cadre de l'invention.

## Revendications

1. Presse à mécanisme d'entraînement par maneton excentré et coopérant, d'un côté, avec l'arbre de sortie d'un moteur et, de l'autre côté, avec un coulisseau de façon à imprimer à ce dernier, par suite de la rotation du moteur, un mouvement rectiligne de va-et-vient entre une position haute, inactive et une position basse, active de pressage, ledit mécanisme d'entraînement (3) comprenant :

   - une première roue (10) montée excentrée sur ledit arbre de sortie du moteur (6) ;
   - un arbre (11) portant ledit maneton excentré (4) relié au coulisseau (7) et disposé parallèlement audit arbre de sortie du moteur et orthogonalement au mouvement rectiligne du coulisseau ;

et

- une deuxième roue (14) montée excentrée sur ledit arbre (11) à maneton,

caractérisée :

- en ce que ledit mécanisme d'entraînement (3) comprend de plus :

    . une troisième roue de compensation (15) montée, de façon excentrée, sur un arbre (16), lesdites première, deuxième et troisième roues étant situées dans un même plan parallèle audit mouvement du coulisseau ; et
    . un lien (17) s'enroulant autour desdites roues pour leur entraînement ;

- et en ce que l'agencement des première (10) et deuxième (14) roues est tel que, lorsque le coulisseau (7) est en position basse, le bras de levier de la deuxième roue (14) par rapport à son arbre est maximal, tandis que le bras de levier de la première roue (10) par rapport à son arbre est minimal.

2. Presse selon la revendication 1, caractérisée en ce que lesdites roues (10, 14, 15) ont un diamètre identique et en ce que l'excentricité des première (10) et deuxième (14) roues par rapport à leurs arbres respectifs est identique.

3. Presse selon l'une des revendications 1 et 2, caractérisée en ce que le lien (17) est constitué par une courroie sans fin s'enroulant autour desdites roues.

4. Presse selon la revendication 3, caractérisée en ce que ladite courroie sans fin (17) est crantée intérieurement et s'enroule autour de crans correspondants prévus sur la périphérie desdites roues (10, 14, 15).

5. Presse selon l'une quelconque des revendications 1 à 4, caractérisée en ce que ledit mécanisme d'entraînement (3) comprend, de plus, un galet de renvoi (18) porté par un arbre (19) et agissant sur l'extérieur dudit lien (17).

6. Presse selon la revendication 5, caractérisée en ce que ledit galet de renvoi (18) est situé entre la première roue (10) et la troisième roue (15).

7. Presse selon l'une quelconque des revendications 1 à 6, caractérisée en ce que ledit mécanisme d'entraînement (3) est confiné dans un boîtier (20) portant ledit moteur (6) et lesdits arbres (11, 16) des deuxième et troisième roues.

8. Presse selon l'une quelconque des revendications 1 à 7, caractérisée en ce qu'une bielle (12) relie, de façon articulée, ledit maneton (4) audit coulisseau (7).

FIG.1

FIG.2

FIG.3

FIG.4

FIG.5

**Office européen des brevets**

**RAPPORT DE RECHERCHE EUROPEENNE**

Numéro de la demande

EP 99 40 3147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | DE 196 01 300 A (VDW EV) 17 juillet 1997 (1997-07-17) * abrégé; figures * | 1,7,8 | B30B1/26 F16H35/02 |
| A,D | DE 42 41 231 A (RAHE WILFRIED) 9 juin 1994 (1994-06-09) * revendications; figures * | 1-4 | |
| A | FR 1 050 626 A (L. SCHULER A.G.) 8 janvier 1954 (1954-01-08) * figures * | 1,7,8 | |

| DOMAINES TECHNIQUES RECHERCHES (Int.Cl.7) |
|---|
| B30B F16H |

Le présent rapport a été établi pour toutes les revendications

| Lieu de la recherche | Date d'achèvement de la recherche | Examinateur |
|---|---|---|
| LA HAYE | 9 mars 2000 | Belibel, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 99 40 3147

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-03-2000

| Document brevet cité au rapport de recherche | Date de publication | Membre(s) de la famille de brevet(s) | Date de publication |
|---|---|---|---|
| DE 19601300 A | 17-07-1997 | EP   0786297 A<br>US   6021683 A | 30-07-1997<br>08-02-2000 |
| DE 4241231 A | 09-06-1994 | AUCUN | |
| FR 1050626 A | 08-01-1954 | AUCUN | |

EPO FORM P0460

Pour tout renseignement concernant cette annexe : voir Journal Officiel de l'Office européen des brevets, No.12/82